# EUROPÄISCHE PATENTSCHRIFT

(11) **EP 1 106 895 B1**
(45) Veröffentlichungstag und Bekanntmachung des Hinweises auf die Patenterteilung: **05.03.2003**
(21) Anmeldenummer: 99123887.4
(22) Anmeldetag: 02.12.1999
(51) Int. Cl.: F16L 33/02

(54) **Klemmvorrichtung**
Clamping device
Dispositif de serrage

(43) Veröffentlichungstag der Anmeldung: 13.06.2001
(73) Patentinhaber: Hans Oetiker AG Maschinen- und Apparatefabrik, 8812 Horgen (CH)
(72) Erfinder: Oetiker, Hans, 8812 Horgen (CH); Meier, Ulrich, 8820 Wädenswil (CH)
(74) Vertreter: Troesch Scheidegger Werner AG

(56) Entgegenhaltungen:
- EP-A- 0 672 858
- US-A- 4 742 600

## Beschreibung

Die vorliegende Erfindung betrifft eine Vorrichtung zum Klemmen gemäss dem Oberbegriff nach Anspruch 1 sowie eine Schlauchklemme bzw. eine Schlauchbandklemme.

Klemmen zum Befestigen von Schläuchen, Rohren, Faltenbälgen usw. sind bestens bekannt, und die vorliegende Erfindung bezieht sich im speziellen auf sogenannte stufenlose Klemmen, welche im montierten Zustand eine stufenlose innere Oberfläche aufweisen. Bekanntlich ergibt sich beim Klemmen von Klammern bzw. von Schlauchklemmen, hervorgerufen durch die ineinander überlappenden Bandabschnitte, die Ursache einer möglichen Leckage, indem im Bereich des Überlappens Stufen entstehen und somit beim Klemmen der zu befestigende Schlauch bzw. das Rohr ungleichmässig geklemmt-wird. Um dieses Problem zu lösen, sind die sogenannten stufenlosen Klemmen oder Klammern bekannt, wozu eine Reihe von Patentschriften einen entsprechenden Beitrag liefern. Aus dem Stand der Technik bekannt sind u.a. die Schweizer Patente CH 647 586, CH 670 868, CH 668 460, CH 669 642, CH 670 869 sowie die US-Patente US 4 299 012, Re 33 934 sowie US 4 315 348. Aus diesen diversen Druckschriften sind derartige stufenlose Klemmen, sowohl aufweisend ein sogenanntes Oetiker-Rohr wie auch sogenannte ohrlose Schlauchklemmen, bekannt. Wesentlich dabei ist, dass das äussere Bandende im Bereich des Überlappens der beiden Bandenden eine Abstufung aufweist sowie mittig im Bereich dieser Abstufung eine längsausgedehnte Öffnung, in welche eine vom anderen Bandende hervorragende Zunge eingreift. Dabei ist bei dieser längsausgedehnten Öffnung der Bandabschnitt nach aussen hin versetzt, den zungenförmigen Endabschnitt überlappend angeordnet, um eine Führung der Zunge zu bilden.

In der Praxis hat sich nun gezeigt, dass durch dieses Überdekken des zungenförmigen Abschnittes beim Spannen der Klemme um das zu sichernde Rohr bzw. den Schlauch relativ hohe Reibung entsteht, womit entsprechend erhöhte Kräfte beim Spannen anzulegen sind. Zudem weisen alle vorgeschlagenen Klemmen, welche sich im Prinzip in der Praxis zum grössten Teil bestens bewährt haben, den Nachteil auf, dass sie entweder genau zu dimensionieren sind, um bei vorgegebenen Aussendurchmessern von Schläuchen und Rohren eine ausreichende und doch nicht zu starke Pressung zu ergeben, oder aber, dass bei Verwendung der sogenannten Oetiker-Ohren diese nach Anbringen der Klemmen zu deformieren sind, um eine ausreichende Pressung zu ergeben. Speziell in letzterem Falle ergibt dies den Nachteil, dass die Klemmen nicht wieder verwendbar sind.

Es ist daher eine Aufgabe der vorliegenden Erfindung, eine weitere Klemmvorrichtung analog der aus dem Stand der Technik bekannten stufenlosen Klemmvorrichtungen vorzuschlagen, bei deren Montage die erwähnten hohen Reibungskräfte nicht auftreten.

Es ist eine weitere Aufgabe der vorliegenden Erfindung, eine stufenlose Klemmvorrichtung vorzuschlagen, welche bei der Montage Dimensionstoleranzen zulässt, so dass auch innerhalb gewisser Grenzen unterschiedliche Rohre bzw. Schläuche und dergleichen mit ein und derselben Klemme montierbar sind, wobei auf das erwähnte, deformierbare Ohr verzichtet werden kann.

Es ist wiederum eine weitere Aufgabe der vorliegenden Erfindung, nach Möglichkeit eine Klemmvorrichtung vorzugschlagen, welche wiederverwendbar ist.

Erfindungsgemäss für das Lösen mindestens einer der obgenannten Aufgaben wird eine Klemmvorrichtung gemäss Anspruch 1 vorgeschlagen.

Analog der aus dem Stand der Technik bekannten Klemmen, Klemmvorrichtungen sowie Schlauchklemmen weist auch die erfindungsgemass vorgeschlagene Klemme eine Abstufung auf. Ebenfalls weist die erfindungsgemässe Klemme eine vom einen Bandende vorstehende, mittige Zunge auf sowie im Bereich der Abstufung im anderen Bandende eine schlitzartige Öffnung, vorgesehen, um das zungenförmige Element aufzunehmen, wobei nun im Unterschied zu den aus dem Stand der Technik bekannten Klemmen und Klemmvorrichtungen diese Öffnung nach aussen hin frei ist, womit der zungenförmige Vorsprung bei der Montage nicht an einer Überdekkung anstossend zu der erwähnten, unerwünschten Reibung führen kann. Durch den Wegfall dieser Überdeckung wird es nun aber auch möglich, dass die Zunge endständig einen nach aussen gebogenen, hakenförmigen Abschnitt aufweist, mittels welchem die beiden Enden des Klemmbandes der Klemmvorrichtung durch Einhängen des Hakens in der schlitzartigen Öffnung miteinander provisorisch verbunden werden können und somit eine Vormontage der Klemmvorrichtung ermöglicht wird.

Gemäss einer bevorzugten Ausführungsvariante sind an der Klemmvorrichtung im Bereich des anderen Bandendes zwischen Abstufung und Bandendabschluss nach aussen gerichtete Wellungen bzw. Querrippen oder Querausbuchtungen vorgesehen, um dem Klemmband beim Spannen um ein zu sicherndes Rohr oder einen Schlauch eine gewissen Dimensionstoleranz in Umfangslänge zu verleihen, indem beim Spannen des Klemmbandes diese Wellungen, Rippen oder Ausbuchtungen in Längsklemmbandrichtung streckbar sind. Vorzugsweise sind diese Wellungen, Rippen oder Ausbuchtungen federnd ausgebildet, so dass sie sich bei einem späteren Wiederentfernen der Klemmvorrichtung von dem zu sichernden Rohr oder dem Schlauch zurückbilden, d.h. sich in ihre ursprüngliche Lage zurückbewegen.

Weitere bevorzugte Ausführungsvarianten der erfindungsgemässen Klemmvorrichtung sind in den abhängigen Ansprüchen charakterisiert.

Die in den Ansprüchen definierten Merkmale beziehen sich im wesentlichen nur auf die neuen Elemente, aufgrund welcher sich die erfindungsgemässe Klemmvorrichtung von den aus dem Stand der Technik bekannten Klemmen unterscheidet. Selbstverständlich kann die erfindungsgemässe Klemmvorrichtung entsprechend den aus dem Stand der Technik bekannten Klemmvorrichtungen modifiziert, variiert oder mit weiteren Elementen ergänzt werden, wie beispielsweise dem bestens bekannten Oetiker-Ohr. Auch ist es möglich, weitere Anschläge und Haken sowie Öffnungen in der erfindungsgemassen Klemmvorrichtung vorzusehen, wie aus den oben erwähnten Dokumenten aus dem Stand der Technik bekannt.

Die erfindungsgemässe Klemmvorrichtung eignet sich insbesondere für jedwelche Art von Klemmen, Klemmbändern oder Schlauchklemmen, mittels welchen insbesondere Rohre, Schläuche, Faltenbälge, Gummimanschetten und dergleichen zu befestigen bzw. zu sichern sind.

Die Erfindung wird nun anschliessend beispielsweise und unter Bezug auf die beigefügten Figuren näher erläutert. Dabei zeigen:
- Fig. 1: die beiden Bandenden eines erfindungsgemässen Klemmbandes in auseinandergezogenem, flachgelegtem Zustand, in Obendraufsicht;
- Fig. 2: die beiden Bandenden von Fig. 1 in flachgelegtem Zustand, in Seitenansicht bzw. im Längsschnitt;
- Fig. 3: eine perspektivische Ansicht einer offenen Klemme gemäss der vorliegenden Erfindung, wobei die Klemme in ihrem vorgeformten, noch nicht zusammengesteckten bzw. montierten Zustand dargestellt ist;
- Fig. 4: die erfindungsgemässe Klammer oder Klemme in Seitenansicht bzw. im Längsschnitt, im provisorisch zusammengefügten, vormontierten Zustand;
- Fig. 5: die erfindungsgemässe Klammer oder Klemme in Seitenansicht bzw. im Längsschnitt, im montierten Zustand, und
- Fig. 6a und 6b: im Längsschnitt, die Ausschnitte a bzw. b aus den Fig. 4 und 5.

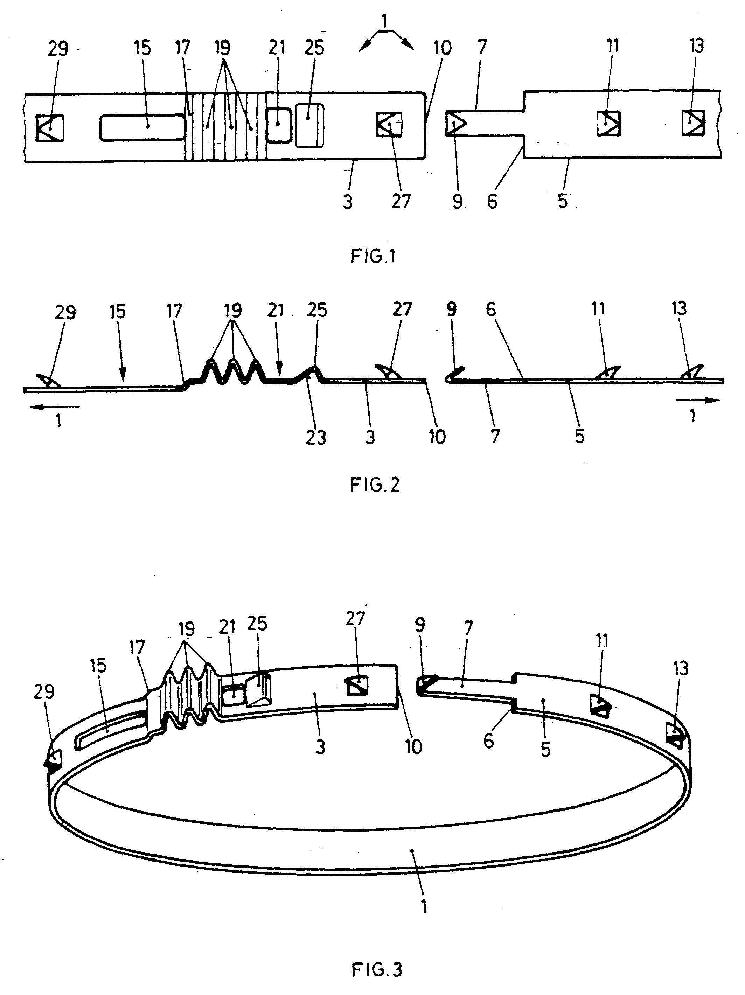

Fig. 1 zeigt die beiden Bandenden 3 und 5 im flachgelegten Zustand eines erfindungsgemässen Klemmbandes 1 im nicht montierten bzw. nicht zusammengesteckten Zustand.

Vorstehend von der Endkante 6 des einen Bandendes 5 ist eine Zunge 7 ausgebildet, welche an ihrem Ende ein aufwärts gebogenes Hakenelement 9 aufweist. Von der Bandendkante 6, in Richtung Klemmbandmitte zurückversetzt angeordnet, ist weiter ein sich auswärts erstreckender Haken 11, welcher vorgesehen ist, um die beiden Bandenden im montierten Zustand zusammenzuhalten. Weiter in Richtung Bandmitte zurückversetzt ausgebildet ist ein weiterer, sich auswärts erstreckender Haken bzw. ein Anschlag 13 vorgesehen, als Angriffsfläche für das Eingreifen eines Montagewerkzeuges, um die Klemme beispielsweise um einen zu sichernden Schlauch zu klemmen, bzw. um den Schlauch zu sichern.

Im gegenüberliegenden, anderen Bandende 3 ist eine in Bandlängsrichtung verlaufende, schlitzartige Öffnung 15 ausgebildet, welche sich von einer Abstufung 17 im Bandende 3 in Richtung Klemmbandmitte hin erstreckt. Diese schlitzartige Öffnung ist vorgesehen für die Aufnahme der Zunge 7, wobei auf diesen Sachverhalt nachfolgend noch näher eingegangen wird. Zwischen Abstufung 17 und Bandendkante 10 sind nach aussen gerichtete Wellungen bzw. Rippen 19 angeordnet, auf deren Funktion später eingegangen wird. Anschliessend an die Wellungen bzw. Rippen 19 ausgebildet ist eine mittige Öffnung 21 angeordnet, vorgesehen, um den Haken 11 im einen Bandende 5 im montierten Zustand der Klemme aufzunehmen bzw. zu halten. Wiederum anschliessend an die Öffnung 21 angeordnet ist eine nach aussen gerichtete Ausbuchtung 25 im anderen Bandende 3 ausgebildet, auf deren Funktion ebenfalls nachfolgend eingegangen wird. Schlussendlich gegen die Bandendkante 10 hin gerichtet ist wiederum ein weiterer, sich auswärts erstreckender Haken bzw. Anschlag 27 ausgebildet, vorgesehen, um als Angriffsfläche für ein Werkzeug zu dienen, mittels welchem die Klammer zusammengezogen bzw. befestigt werden kann.

In Fig. 2 sind die-beiden Bandenden 3 und 5 aus Fig. 1 im Längsschnitt bzw. in Seitenansicht dargestellt, wobei nun insbesondere die von der Bandebene sich auswärts erstreckenden Haken, Anschläge, Wellungen und dergleichen deutlich erkennbar sind sowie die zum Band quer verlaufenden Wellungen bzw. Rippen 19 und die Ausbuchtung 25 im Bereich der Öffnung 21.

Fig. 3 zeigt eine perspektivische Ansicht einer offenen Klammer bzw. eines Klemmbandes 1, aufweisend die beiden Bandenden 3 und 5, entsprechend denjenigen, dargestellt in den Fig. 1 und 2 ausgebildet. Dabei sind analoge Teile und Merkmale mit denselben Bezugszeichen versehen wie in den Fig. 1 und 2.

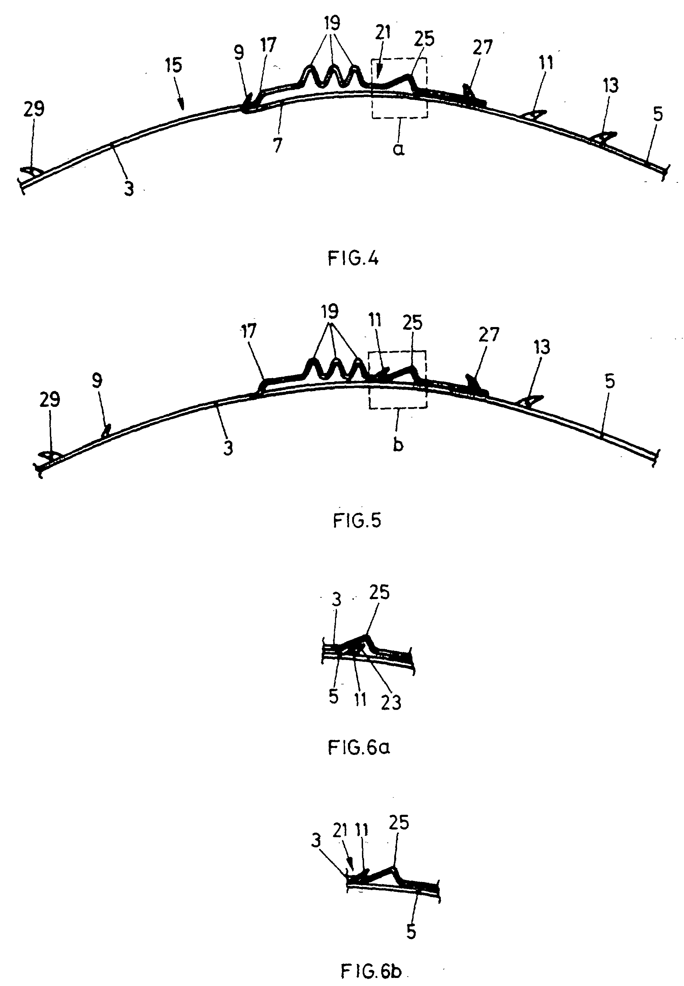

Für das bessere Verständnis der Funktionsweise sei nun nachfolgend auf die Fig. 4 bis 6 verwiesen.

Ausgehend von der Darstellung in der Fig. 2 werden nun bei der Montage des Klemmbandes zunächst die beiden Bandenden 3 und 5 provisorisch zusammengefügt, indem der endständige Haken 9 der Zunge 7 in den Längsschlitz 15 eingeführt wird und an der Kante im Bereich der Abstufung 17 eingehängt wird. Die Position der beiden sich nun überlappenden Bandenden 3 und 5 im provisorisch vormontierten Zustand ist in Fig. 4 schematisch und in Seitenansicht bzw. im Längsschnitt dargestellt. In dieser Position beispielsweise kann die Klemme über ein Schlauchende bzw. ein Rohrende oder eine Balgöffnung und dergleichen aufgeschoben werden, welches Schlauch- oder Rohrende zu befestigen ist bzw. zu sichern ist. Mittels eines Klemmwerkzeuges werden anschliessend die beiden sich auswärts erstreckenden Haken bzw. Anschläge 13 und 27 in den beiden Bandenden und 5 hintergriffen und die beiden Bandenden in sich überlappender Richtung weiter zusammengezogen. Während dieses Klemmvorganges bewegt sich die Zunge 7 innerhalb der schlitzartigen Öffnung 15, wobei sich infolge der Abstufung 17 eine weitgehendst stufenlose innere Oberfläche des Klemmbandes ergibt. Dies hat zur Folge, dass das zu sichernde Schlauchende bzw. Rohrende oder der Gummibalg gleichmässig geklemmt bzw. gepresst wird und somit keine örtliche Quetschung stattfinden kann, welche später zu Leckagen führen kann. Dieser Klemmvorgang durch Zusammenziehen der beiden Haken 27 und 13 erfolgt solange, bis der sich nach aussen erstreckende Haltehaken 11 in der Öffnung 21 im anderen Bandende 3 einhängt und das Band sichert, so dass ein Wiederöffnen des Bandes verunmöglicht wird. Sollte nun das Band etwas zu eng dimensioniert sein, werden die Rippen bzw. Wellungen 19 leicht auseinandergezogen, um eine richtige Dimensionierung zu ergeben bzw. um den fehlenden Umfang auszugleichen.

Die oben erwähnte, im Anschluss an die Öffnung 21 sich nach aussen erstreckende Ausbuchtung 25 hat bei der Montage den Zweck, wie aus Fig. 6a erkennbar, als Führung für den sich nach aussen erstreckenden Haken 11 zu dienen, um ein sicheres Einhängen in die Öffnung 21 zu gewährleisten. Zudem ergibt sich durch die schiefwinklige Anordnung der einen Seitenwandung 23 der Ausbuchtung 25 ein verbessertes Einhängen bzw. ein gesicherteres Montieren der Klemme, indem infolge des schrägen Winkels der Haken 11 praktisch toleranzfrei an der einen Seitenkante der Öffnung 21 anliegt und somit ein unerwünschtes Wiederaushängen des Hakens praktisch verunmöglicht wird, wie in Fig. 6b erkennbar.

Die erfindungsgemäss beschriebene Klemmvorrichtung weist nun gegenüber den aus dem Stand der Technik bekannten Klemmen bzw. Klemmvorrichtungen und Klammern wesentliche Vorteile auf, insbesondere bei der Montage. So ergibt sich durch die nach aussen offene und nicht mehr überdeckte schlitzartige Öffnung 15 keine Reibfläche mehr, an welcher die Zunge 7 beim Einführen und Zusammenziehen der Klemme bei den bekannten Vorrichtungen anstösst. Im weiteren kann die Klemme durch den endständigen Haken 9 der Zunge 7 in eine vormontierte Position gebracht werden, in welcher die beiden Bandenden bereits sicher zusammengehalten werden. Zudem wird die Zunge 7 infolge des Hakens 9 sicher und seitlich nicht mehr auslenkbar in der schlitzartigen Öffnung 15 geführt. Herstelltoleranzen sowohl der Klemme bzw. Klemmvorrichting wie auch beim zu sichernden Schlauch, des Rohres oder des Gummibalges werden durch die Querrippungen bzw. Wellungen 19 ausgeglichen. Insbesondere bei Ausführungen der Klemme in gehärtetem Stahl bilden diese Wellungen oder Rippen eine wiederrückstellbare Feder, so dass Toleranzausgleichungen bei Demontage des Klemmbandes wieder rückgängig gemacht werden. Dies ergibt den weiteren gewichtigen Vorteil der Wiederverwendbarkeit der Klemme, indem bei Demontage das Klemmband in seine ursprüngliche Länge rückgestellt wird. Wiederum ein weiterer Vorteil liegt in der relativ einfachen Ausbildung der beiden Montagehaken 13 und 27, welche im Gegensatz zu den aus dem Stand der Technik bekannten Anschlägen mit x-beliebigen zangenartigen Montagewerkzeugen hintergriffen werden können zum Montieren der erfindungsgemässen Klemmvorrichtung. Auch die Demontage der Klemmvorrichtung ist einfach, indem sich nun der im anderen Bandende 3 angeordnete, sich nach aussen erstreckende Demontagehaken 29 als weiterer Anschlag anbietet, welcher zusammen mit dem Endhaken 9 der Zunge 7 für das Wiederöffnen der Klemme verwendet werden kann. Auch diese beiden Quasi-Anschläge ermöglichen das Wiederöffnen der erfindungsgemässen Klemmvorrichtung mit einem x-beliebigen zangenartigen Werkzeug.

Selbstverständlich ist die vorliegende Erfindung nicht auf die in den Figuren 1 bis 6 dargestellten Ausführungsformen beschränkt. Wie bereits oben erwähnt, können weitere Elemente bzw. Merkmale in der erfindungsgemässen Klemmvorrichtung vorgesehen werden, wie sie beispielsweise im eingangs erwähnten Stand der Technik beschrieben sind. So können beispielsweise statt der angegebenen Montagehaken die aus dem Stand der Technik bekannten Ausbuchtungen verwendet werden, in welchen spezielle Werkzeuge eingreifend das Klemmband montieren können. Auch ist es selbstverständlich möglich, weitere Haltehaken zum Haken 11 vorzusehen, insbesondere, falls erhöhte Kräfte in Bandrichtung durch das Klemmband aufzunehmen sind. Wiederum kann auf den Demontagehaken 29 verzichtet werden, beispielsweise bei Einwegklemmbändern oder falls eine Demontage mit den beiden Montagehaken 13 und 27 möglich ist.

In der Regel werden für die erfindungsgemässen Klemmvorrichtungen rostfreier Stahl bzw. Stahlblech verwendet, doch besteht auch die Möglichkeit der Verwendung von gehärtetem Stahl, insbesondere, falls die Querwellungen bzw. Rippen federnd auszubilden sind. Aber auch verstärkte Kunststoffe oder andere Metalle bzw. Metallegierungen können für die Herstellung der erfindungsgemässen Klemmvorrichtung verwendet werden.

## Patentansprüche

1. Klemmvorrichtung, umfassend ein Klemmband (1) mit frei beweglichen Enden (3, 5) und mit Mitteln, um diese frei beweglichen Enden miteinander mechanisch zu verbinden, wobei diese Mittel mindestens einen sich auswärts erstreckenden Haken (11) in einem Ende (3) des Klemmbandes (1) umfassen, welcher dazu bestimmt ist, beim mechanischen Verbinden in mindestens eine öffnung (21), angeordnet am anderen Ende (5) des Klemmbandes (1), einzugreifen sowie weiter je mindestens einen Anschlag (13, 27) in den Bandteilen (3, 5) im Bereich der Enden zum Angreifen eines Werkzeuges, um das Klemmband (1) um einen zu befestigenden Gegenstand zu spannen, wobei diese Anschläge (13, 27) aus sich nach aussen erstreckenden Zonen des Klemmbandes bestehen, derart, dass die sich nach aussen erstreckenden beiden Anschläge (13, 27) der beiden Enden des Klemmbandes (3, 5) dazu vorgesehen sind, beim Spannen der Klemmvorrichtung zueinander geschoben zu werden und zum Übertragen der in Bandlängsrichtung wirkenden Kräfte dienen, und wobei die Mittel weiter am einen Ende des Bandes (3) von diesem in Bandlängsrichtung vorstehend mit einer Zunge (7) versehen sind, welche Zunge vorgesehen ist, um in eine offene Längsöffnung (15), sich erstrekkend in der Bandmitte des anderen Endes, einzugreifen, um so als Führungs- und als Zentrierungsmittel zu dienen, **dadurch gekennzeichnet, dass** die Zunge endständig einen nach aussen gebogenen, hakenförmigen Abschnitt (9) aufweist, um durch die Längsöffnung durchgreifend die Zunge im offenen, vormontierten Zustand des Bandes an der gegen die Bandendkante (10) des anderen Bandendes (3) gerichteten Abschlusskante im Bereich einer Abstufung (17) zu halten, wobei diese Abstufung (17) dazu vorgesehen ist, um im montierten Zustand im Bereich der Überlappung der Enden (3, 5) des Bandes (1) eine weitgehendst gleichmässige, stufenlose innere Oberfläche des Bandes (1) zu erzeugen.

2. Klemmvorrichtung nach Anspruch 1, **dadurch gekennzeichnet, dass** im anderen Bandende (3) zwischen Längsöffnung (15) bzw. Abstufung (17) und Bandendkante (10) des anderen Bandendes mindestens eine quer zur Bandlängsrichtung verlaufende Wellung (19) bzw. Rippung angeordnet ist.

3. Klemmvorrichtung nach Anspruch 2, **dadurch gekennzeichnet, dass** mindestens zwei, vorzugsweise drei, quer zur Bandlängsrichtung angeordnete Wellungen (19) bzw. Rippen vorgesehen sind.

4. Klemmvorrichtung nach einem der Ansprüche 2 oder 3, **dadurch gekennzeichnet, dass** das andere Bandende (3) im Bereich der Wellungen oder Rippen (19) in Bandlängsrichtung wenigstens nahezu federnd ausgebildet ist.

5. Klemmvorrichtung nach einem der Ansprüche 2 bis 4, **dadurch gekennzeichnet, dass** zwischen den Wellungen oder Rippen (19) und dem nahe an der Bandendkante (10) angeordneten, sich nach aussen erstreckenden Anschlag (27) mindestens eine Öffnung (21) angeordnet ist für die Aufnahme des sich auswärts erstreckenden Hakens (11).

6. Klemmvorrichtung nach Anspruch 5, **dadurch gekennzeichnet, dass** das Bandmaterial von der Öffnung (21) zu der Bandendkante (10) hin nach aussen aufgebogen bzw. ausgepresst ist, um einen schiefwinkligen Bandbereich (23) bei derjenigen Kante der Öffnung (21) zu bilden, welche vorgesehen ist, um vom Haken (11) hintergriffen zu werden.

7. Klemmvorrichtung nach Anspruch 6, **dadurch gekennzeichnet, dass** der schiefwinklige Bereich (23) mit dem Band (1) im Bereich der Öffnung (21) einen Winkel von 10° bis 50° einschliesst.

8. Klemmvorrichtung nach einem der Ansprüche 2 bis 7, **dadurch gekennzeichnet, dass** im anderen Bandende (3), beabstandet von der Längsöffnung (15) in Richtung zur Bandmitte hin, ein weiterer, nach aussen vorstehender Haken bzw. Anschlag (29) vorgesehen ist, um die geschlossene Klemme durch Eingreifen eines Werkzeuges am weiteren Anschlag (29) und dem endständigen, hakenförmigen Abschnitt (9) an der Zunge (7) wieder zu lösen.

9. Klemmvorrichtung nach einem der Ansprüche 1 bis 8, **dadurch gekennzeichnet, dass** die Höhe der Abstufung (17) in etwa der Dicke des Bandes (1) entspricht.

10. Klemmvorrichtung nach einem der Ansprüche 1 bis 9, **dadurch gekennzeichnet, dass** die Haken und Anschläge aus dem Bandmaterial ausgestanzt oder ausgepresst sind.

11. Klemmvorrichtung nach einem der Ansprüche 1 bis 10, **dadurch gekennzeichnet, dass** das Bandmaterial aus rostfreiem Stahl, Stahlblech oder gehärtetem Stahl besteht.

12. Klemmvorrichtung nach einem der Ansprüche 1 bis 10, **dadurch gekennzeichnet, dass** als Bandmaterial ein verstärktes Polymer, wie insbesondere ein Kohlenstoffaserverstärkter Kunststoff, verwendet wird.

13. Verwendung der Klemmvorrichtung nach einem der Ansprüche 1 bis 12 als Schlauchklemme, als Klemme zum Befestigen von Schläuchen oder Rohren bzw. zum Befestigen von Faltenbälgen, Gummimanschetten.

## Claims

1. A clamping device, comprising a clamping band (1) with freely movable ends (3, 5) and with means for mechanically joining together these freely movable ends, these means comprising at least one outward-extending hook (11) in one end (3) of the clamping band (1) which is intended, upon mechanical joining, to engage in at least one opening (21), arranged on the other end (5) of the clamping band (1), and furthermore at least one stop (13, 27) in each case in the band parts (3, 5) in the region of the ends for engaging a tool, in order to tighten the clamping band (1) around an object to be fastened, these stops (13, 27) consisting of outward-extending zones of the clamping band such that the outward-extending two stops (13, 27) of the two ends of the clamping band (3, 5) are intended to be pushed towards each other on tightening the clamping device and serve to transmit the forces acting in the longitudinal direction of the band, and the means furthermore at one end of the band (3) being provided with a tongue (7) projecting from the band in the longitudinal direction thereof, which tongue is provided to engage in an open longitudinal opening (15), extending in the centre of the band of the other end, in order thus to serve as a guiding and centring means, **characterised in that** the tongue has at the end an outward-curved, hook-shaped section (9) in order, by penetrating through the longitudinal opening, to hold the tongue in the open, premounted state of the band on the finishing edge directed against the end edge (10) of the other band end (3) in the region of a step (17), this step (17) being intended to produce a step-free inner surface of the band (1) which is as even as possible in the mounted state in the region of the overlap of the ends (3, 5) of the band (1).

2. A clamping device according to Claim 1, **characterised in that** at least one corrugation (19) or set of ribs extending transversely to the longitudinal direction of the band is arranged in the other band end (3) between the longitudinal opening (15) or step (17) and the end edge (10) of the other band end.

3. A clamping device according to Claim 2, **characterised in that** at least two, preferably three, corrugations (19) or ribs arranged transversely to the longitudinal direction of the band are provided.

4. A clamping device according to one of Claims 2 or 3, **characterised in that** the other band end (3) in the region of the corrugations or ribs (19) is made at least virtually resilient in the longitudinal direction of the band.

5. A clamping device according to one of Claims 2 to 4, **characterised in that** at least one opening (21) for receiving the outward-extending hook (11) is arranged between the corrugations or ribs (19) and the stop (27) which extends outwards and is located close to the end edge (10) of the band.

6. A clamping device according to Claim 5, **characterised in that** the band material is bent or pressed outwards from the opening (21) to the end edge (10) of the band in order to form an acute-angled band region (23) on that edge of the opening (21) behind which the hook (11) is intended to engage.

7. A clamping device according to Claim 6, **characterised in that** the acute-angled region (23) encloses an angle of 10° to 50° with the band (1) in the region of the opening (21).

8. A clamping device according to one of Claims 2 to 7, **characterised in that** a further, outward-projecting hook or stop (29) is provided in the other end (3) of the band, at a distance from the longitudinal opening (15) towards the centre of the band, in order to release the closed clamp again by engaging a tool on the further stop (29) and the end hook-shaped section (9) on the tongue (7).

9. A clamping device according to one of Claims 1 to 8, **characterised in that** the height of the step (17) corresponds approximately to the thickness of the band (1).

10. A clamping device according to one of Claims 1 to 9, **characterised in that** the hooks and stops are cut or pressed out of the band material.

11. A clamping device according to one of Claims 1 to 10, **characterised in that** the band material consists of stainless steel, steel sheet or hardened steel.

12. A clamping device according to one of Claims 1 to 10, **characterised in that** a reinforced polymer, such as in particular a carbon-fibre-reinforced plastics material, is used as band material.

13. The use of the clamping device according to one of Claims 1 to 12 as a hose clamp, as a clamp for fastening hoses or tubes or for fastening bellows or rubber collars.

## Revendications

1. Dispositif de serrage comprenant un collier de serrage (1) avec des extrémités (3, 5) librement mobiles et des moyens pour relier mécaniquement ces extrémités librement mobiles, ces moyens comprenant au moins un crochet (11) qui s'étend vers l'extérieur, dans une extrémité (3) du collier de serrage (1), et qui est destiné à venir en prise, lors de la liaison mécanique, dans au moins une ouverture (21) disposée sur l'autre extrémité (5) du collier de serrage (1), ainsi qu'au moins une butée (13, 27), dans les parties de collier (3, 5) situées dans la zone des extrémités, pour qu'un outil puisse agir afin de bloquer le collier de serrage (1) autour d'un objet à fixer, ces butées (13, 27) se composant de zones du collier s'étendant vers l'extérieur, de telle sorte que les deux butées (13, 27) des deux extrémités de collier (3, 5) qui s'étendent vers l'extérieur sont prévues pour être poussées l'une vers l'autre, lors du blocage du dispositif de serrage, et pour transmettre les forces qui agissent dans le sens longitudinal du collier, et les moyens étant en outre pourvus, à une extrémité du collier (1), d'une languette (7) qui dépasse dans le sens longitudinal du collier et qui est destinée à venir en prise dans une ouverture longitudinale ouverte (15) qui s'étend au milieu de l'autre extrémité du collier, afin de servir ainsi de moyen de guidage et de moyen de centrage,
**caractérisé en ce que** la languette (7) présente, côté extrémité, une section en forme de crochet (9) pliée vers l'extérieur qui est destinée, en traversant l'ouverture longitudinale, à retenir la languette dans la zone d'un épaulement (17) lorsque le collier est en position prémontée ouverte, contre le bord d'extrémité dirigé vers le bord d'extrémité (10) de l'autre extrémité de collier (3), cet épaulement (17) étant destiné à produire dans la zone du chevauchement des extrémités (3, 5) du collier (1), en position montée, une surface intérieure du collier (1) très régulière et continue.

2. Dispositif de serrage selon la revendication 1, **caractérisé en ce qu'**il est prévu dans l'autre extrémité de collier (3), entre l'ouverture longitudinale (15) ou l'épaulement (17) et le bord d'extrémité de collier (10) de cette autre extrémité de collier, au moins une ondulation (19) ou nervure qui s'étend transversalement par rapport au sens longitudinal du collier.

3. Dispositif de serrage selon la revendication 2, **caractérisé en ce qu'**il est prévu au moins deux, de préférence trois ondulations (19) ou nervures disposées transversalement par rapport au sens longitudinal du collier.

4. Dispositif de serrage selon la revendication 2 ou 3, **caractérisé en ce que** l'autre extrémité de collier (3) est au moins approximativement élastique dans le sens longitudinal du collier, dans la zone des ondulations ou nervures (19).

5. Dispositif de serrage selon l'une des revendications 2 à 4, **caractérisé en ce qu'**il est prévu, entre les ondulations ou nervures (19) et la butée (27) qui est disposée près du bord d'extrémité de collier (10) et qui s'étend vers l'extérieur, au moins une ouverture (21) pour recevoir le crochet (11) qui s'étend vers l'extérieur.

6. Dispositif de serrage selon la revendication 5, **caractérisé en ce que** le matériau du collier est cintré ou comprimé vers l'extérieur, de l'ouverture (21) en direction du bord d'extrémité de collier (10), afin de former une zone de collier inclinée (23) au niveau du bord de l'ouverture (21) derrière lequel le crochet (11) doit venir en prise.

7. Dispositif de serrage selon la revendication 6, **caractérisé en ce que** la zone inclinée (23) définit avec le collier (1), dans la zone de l'ouverture (21), un angle de 10° à 50°.

8. Dispositif de serrage selon l'une des revendications 2 à 7, **caractérisé en ce qu'**il est prévu dans l'autre extrémité de bande (3), à une certaine distance de l'ouverture longitudinale (15) et en direction du milieu du collier, un autre crochet ou butée (29) saillant vers l'extérieur, pour débloquer le collier fermé, grâce à l'application d'un outil contre ladite butée (29) et contre la section d'extrémité en forme de crochet (9) prévue sur la languette (7).

9. Dispositif de serrage selon l'une des revendications 1 à 8, **caractérisé en ce que** la hauteur de l'épaulement (17) correspond à peu près à l'épaisseur du collier (1).

10. Dispositif de serrage selon l'une des revendications 1 à 9, **caractérisé en ce que** les crochets et butées sont réalisés dans le matériau du collier par découpage ou matriçage.

11. Dispositif de serrage selon l'une des revendications 1 à 10, **caractérisé en ce que** le matériau du collier se compose d'inox, de tôle d'acier ou d'acier trempé.

12. Dispositif de serrage selon l'une des revendications 1 à 10, **caractérisé en ce qu'**on utilise comme matériau de collier un polymère renforcé, en particulier une matière plastique renforcée par des fibres de carbone.

13. Utilisation du dispositif de serrage selon l'une des revendications 1 à 12 comme pince pour tuyaux souples, comme pince pour fixer des tuyaux ou des tubes ou pour fixer des soufflets ou des garnitures en caoutchouc.
